# FASCICULE DE BREVET EUROPEEN

(11) **EP 2 160 328 B1**
(45) Date de publication et mention de la délivrance du brevet: **21.12.2011**
(21) Numéro de dépôt: 08805630.4
(22) Date de dépôt: 02.06.2008
(51) Int. Cl.: B64D 27/26, B64F 5/00

(54) **PLATINE DE FIXATION ET LONGERON DE MANUTENTION D'ENSEMBLE PROPULSIF MONOBLOC D'UN AERONEF**
SICHERUNGSPLATTE UND LÄNGLICHES GRIFFELEMENT FÜR EINE EINTEILIGE FLUGZEUGANTRIEBSEINHEIT
SECURING PLATE AND LONGITUDINAL HANDLING MEMBER FOR A ONE-PIECE AIRCRAFT PROPULSION UNIT

(30) Priorité: 22.06.2007 FR 0704495
(43) Date de publication de la demande: 10.03.2010
(73) Titulaire: Aircelle, 76700 Gonfreville l'Orcher (FR)
(72) Inventeur: VAUCHEL, Guy, Bernard, F-76600 Le Havre (FR); HILLEREAU, Nicolas, F-76600 Le Havre (FR); COLLIER, Jérôme, F-76600 Le Havre (FR); CRIBELIER, Jean-François, F- 76190 Hautot le Vatois (FR)
(74) Mandataire: Gaillarde, Frédéric F. Ch.
(86) Numéro de dépôt international: PCT/FR2008/000740
(87) Numéro de publication internationale: WO 2009/007520

(56) Documents cités:
- WO-A-2006/097484
- FR-A- 2 878 229
- FR-A- 2 891 251
- US-A- 3 666 211
- US-A- 3 666 211

## Description

La présente invention se rapporte notamment à une platine de fixation permettant la fixation amovible d'un ensemble propulsif monobloc à une aile d'un aéronef.

Il est connu depuis fort longtemps de concevoir une nacelle pour aéronef, adaptée pour être montée autour d'un moteur comportant un carter de soufflante, ladite nacelle comprenant une structure de liaison adaptée pour être montée sur le bord aval dudit carter d'une part, et sur un mât d'autre part, ce mât étant solidaire d'une aile ou d'une partie du fuselage de l'aéronef.

Un changement de moteur s'effectue en déconnectant le moteur au niveau des suspensions. Certains capots de la nacelle, connus sous le nom de Transcowl et de Fan Cowl, restent connectées au mât et doivent donc être maintenus ouverts pour permettre le remplacement du moteur. Un dispositif permettant de monter et descendre le moteur est ensuite utilisé. Ce dispositif comprend deux longerons indépendants, disposés transversalement par rapport à l'axe du moteur, l'un étant fixé à l'avant du mât et l'autre au milieu. Un système de levage du type bootstrap est prévu au niveau de chacune des extrémités des deux longerons, de manière à pouvoir régler la hauteur du moteur en quatre points, chaque système de levage étant indépendant des trois autres. Un sytème de levage du type boot strap est par exemple connu à partir du document US-A-3 666 211.

Cependant, il est depuis peu envisagé d'employer un ensemble propulsif monobloc en lieu et place d'un ensemble classique tel qu'évoqué précédemment. Ainsi, dans un tel ensemble propulsif monobloc, le moteur, la nacelle et le mât sont rendus indissociables, et l'interface habituelle disparaît.

Dans une telle configuration, la procédure de maintenance classique de changement du moteur est rendue obsolète puisque le mât est désormais solidaire du moteur et de la nacelle, et ne peut donc plus supporter les deux longerons précédemment décrits.

L'invention a pour but de résoudre ce problème, et consiste pour cela en une platine de fixation et une paire de longerons de manutention selon la revendication 1.

Ainsi, après avoir fixé les longerons et équipés chacun d'eux d'un système classique de bootstrap, il suffit de déconnecter l'ensemble propulsif monobloc de la platine rattachée à l'aile pour procéder à l'opération de maintenance. Ceci permet donc de procéder au changement du moteur dans un délai très court, tout en limitant le nombre d'opérations manuelles. La présente invention permet donc de créer une nouvelle interface entre l'outillage de manutention au sol et les parties restant fixées à l'aile.

Selon une variante de réalisation préférée des premiers moyens de raccordement, ces derniers sont réalisés sous la forme de ferrures d'attache.

Préférentiellement, au moins une première ferrure d'attache et une deuxième ferrure d'attache se faisant face sont ménagées de part et d'autre de la platine.

Préférentiellement encore, au moins une ferrure d'attache avant est ménagée en partie avant de la platine. De plus ou en variante, au moins une ferrure d'attache arrière est ménagée en partie arrière de la platine.

Selon une variante de réalisation préférée des deuxièmes moyens de raccordement, ces derniers sont réalisés sous la forme de perçages ménagés dans la platine.

Selon une variante de réalisation préférée des troisièmes moyens de raccordement, ces derniers sont réalisés sous la forme d'alésages ménagés dans la platine.

Avantageusement, les premiers organes de raccordement comprennent une première ferrure de jonction en partie centrale.

Avantageusement encore, les deuxièmes organes de raccordement comprennent une deuxième ferrure de jonction en partie arrière.

Préférentiellement, les longerons comprennent une partie avant adaptée pour recevoir une tringle disposée transversalement. De plus ou en variante, ce longeron peut comprendre une partie centrale adaptée pour recevoir une tringle disposée transversalement.

L'invention sera mieux comprise à l'aide de la description détaillée qui est exposée ci-dessous en regard du dessin annexé dans lequel :
La figure 1 est une vue en perspective d'une platine de fixation selon l'invention ;
La figure 2 est une vue schématique en perspective d'une installation selon l'invention, en cours d'opération de maintenance ;
La figure 3 est une vue similaire à la figure 2, avec omission de l'aile ;
La figure 4 est une vue de côté de l'installation représentée à la figure 3 ;

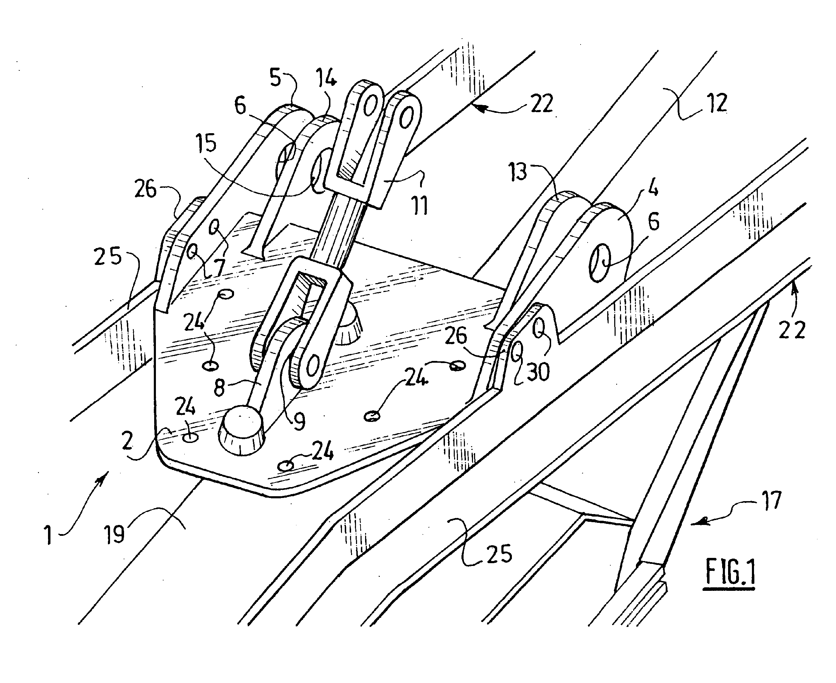

Une platine 1 de fixation selon l'invention, telle que représentée plus spécifiquement à la figure 1, comprend une embase 2 sensiblement plane, formant sensiblement un trapèze isocèle, et destinée à être fixée dans une aile 3 d'un aéronef.

Cette embase 2 comporte six perçages 24 disposés en V. De plus, cette embase 2 est encadrée par une première ferrure d'attache 4 et une deuxième ferrure d'attache 5 se faisant face et étant orientées vers l'extérieur dans un plan perpendiculaire à ladite embase 2. Un orifice 6 arrière et deux alésages 7 avant sont ménagés dans chacune des deux ferrures d'attache 4, 5.

L'embase 2 comporte également une troisième ferrure d'attache 13 et une quatrième ferrure d'attache 14 se faisant face et orientées vers l'extérieur dans un plan perpendiculaire à ladite embase 2. Ces deux ferrures d'attache 13, 14 sont chacune équipées d'un alésage 15, et sont alignées avec les première et seconde ferrures d'attache 4, 5 de telle sorte que les orifices 6 et les alésages 15 sont également alignés.

Une ferrure d'attache avant 8 pourvue d'un oeillet 9 est ménagée en partie avant de la face supérieure de l'embase 2, sur l'axe de symétrie de l'embase 2, de façon à ne pas être dans l'alignement des ferrures d'attache 4, 5, 13 et 14.

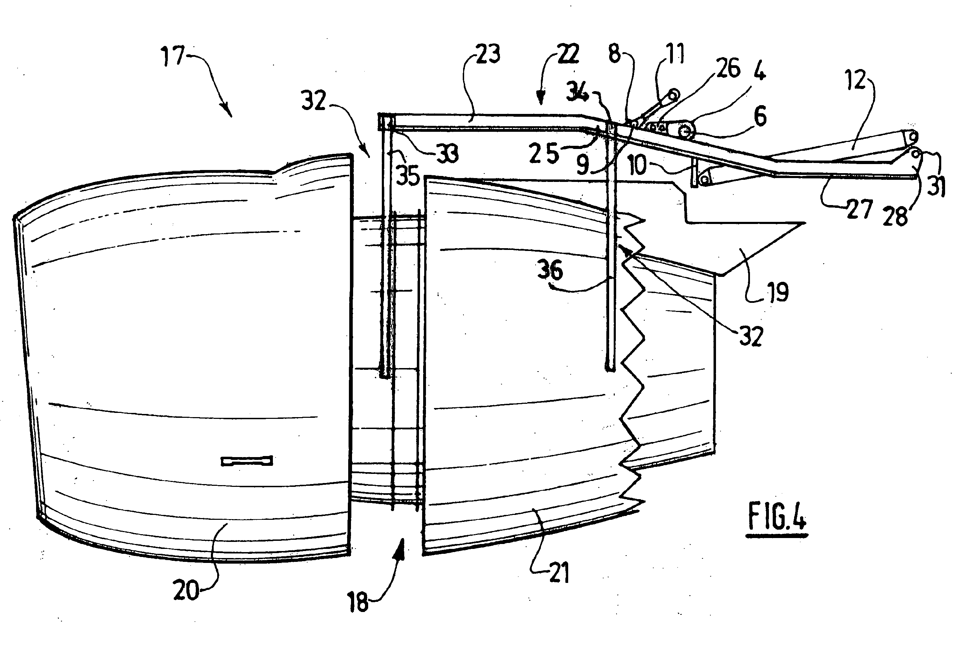

Comme représentée plus spécialement à la figure 4, l'embase 2 est prolongée à l'arrière par une ferrure d'attache arrière 10 orientée vers l'intérieur dans un plan perpendiculaire à ladite embase 2. Cette ferrure d'attache arrière 10 est équipée d'un oeillet (non représenté) disposé sur l'axe de symétrie de l'embase 2.

La platine 1 peut ainsi être rattachée fixement à l'aile 3 par l'intermédiaire de ses ferrures d'attaches 4, 5, 8, 10, 13 et 14.

Plus précisément, chaque paire de ferrures d'attache 4, 13 et 5, 14 peut être boulonnée dans une oreille fixe (non représentée) de l'aile 3 de manière à assurer une maintien équilibré. L'oeillet 9 de la ferrure d'attache avant 8 et l'oeillet de la ferrure d'attache arrière 10 sont respectivement raccordés à un point fixe de l'aile 3 par l'intermédiaire d'une bielle 11, 12.

Plus précisément, l'ensemble propulsif monobloc 17 se décompose schématiquement en un moteur (non représenté), une nacelle 18 et un mât 19 rendus indivisibles les uns des autres. De façon schématique, la nacelle 18 comprend une structure avant 20 entourant le carter, et une structure arrière 21 faisant généralement office d'inverseur de poussée.

L'ensemble propulsif monobloc 17 est fixement rattaché dans l'embase 2 par boulonnage dans les perçages 24.

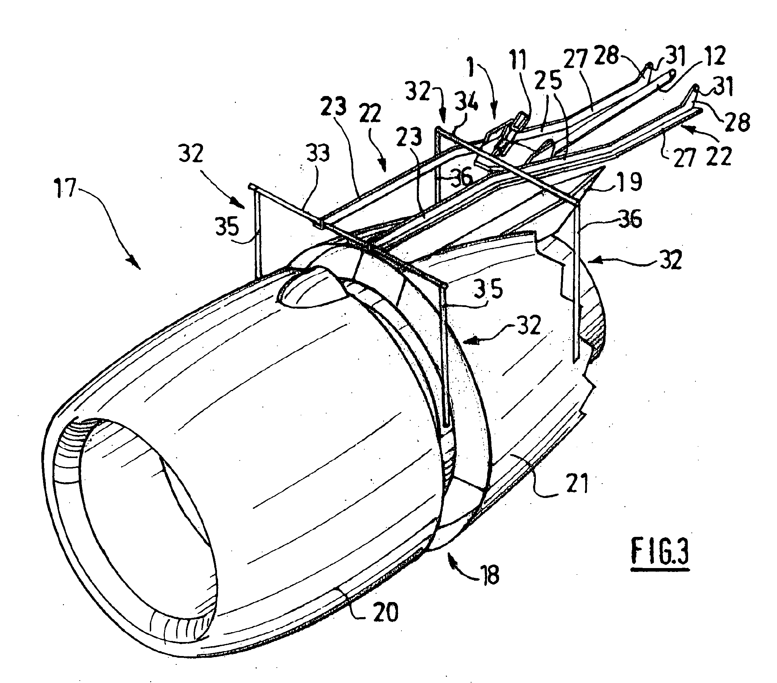

Afin de procéder aux opérations de maintenance au cours desquelles le moteur est notamment déposé puis remonté, il est nécessaire de faire appel à deux longerons 22 de manutention tels que représentés aux figures 1 à 4.

Chacun de ces deux longerons 22 comprend une partie avant 23, une partie centrale 25 pouvant être inclinée équipée d'au moins une première ferrure de jonction 26, et une partie arrière 27 équipée d'une deuxième ferrure de jonction 28, ces première et deuxième ferrures de jonction 26, 28 étant disposés vers l'extérieur dans un plan perpendiculaire à l'embase 2.

Comme cela se déduit plus particulièrement de la figure 1, la première ferrure de jonction 26 est dans cet exemple équipée de deux alésages 30, similaires aux alésages 7 des ferrures d'attache 4, 5, dont l'écartement est identique à celui mesuré entre les alésages 7. Par ailleurs, un oeillet 31 est ménagé dans la deuxième ferrure de jonction 28.

Le montage des longerons 22 est réalisé de la façon suivante. L'accès aux différentes ferrures est obtenu en démontant les capotages externes du mât 19 ou bien en ouvrant une trappe permettant de laisser passer l'outillage et de le fixer. Cet accès doit être aisé et rapide pour ne pas grever les temps de montage/démontage.

Les longerons 22 sont ensuite disposés de part et d'autre de la platine 1 de manière à ce que, d'une part, les première et deuxième ferrures de jonction 26, 28 de la partie centrale 25 puissent être respectivement boulonnées aux ferrures d'attache 4, 5 par l'intermédiaire des alésages complémentaires 7, 30, et d'autre part, l'oeillet 31 puisse être fixé par boulonnage dans un point fixe (non représenté) solidaire de l'aile 3.

En variante, chaque longeron 22 peut également reposer sur lesdites ferrures le cas échéant.

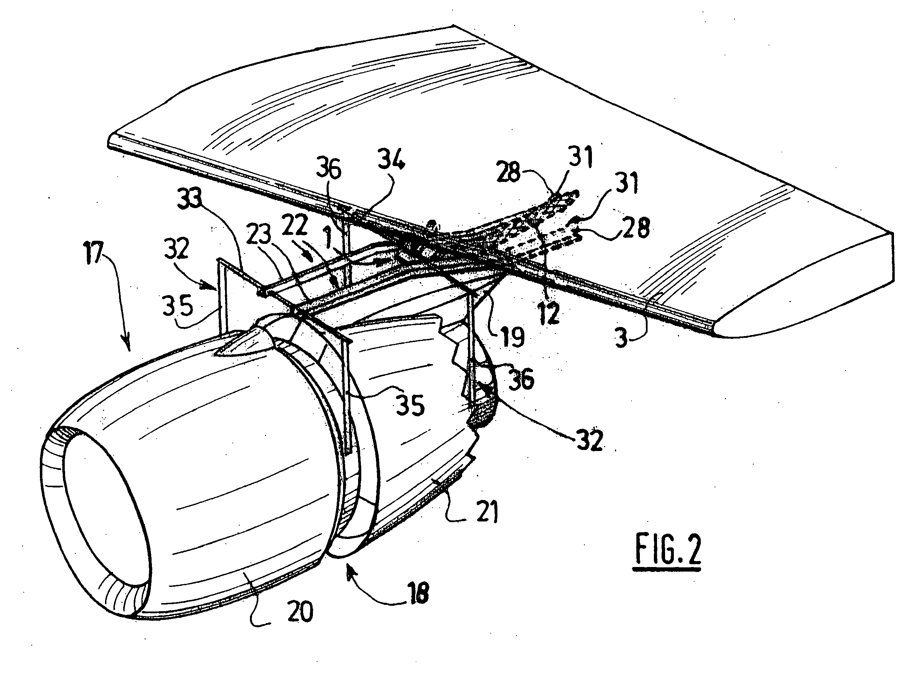

Le personnel peut alors procéder à l'installation classique des systèmes de levage 32 du type bootstrap. Pour cela, il est tout d'abord nécessaire, comme représenté sur les figures 2 à 4, de translater la structure avant 20 vers l'avant afin de donner accès aux points de hissage à la structure du moteur.

Une première tringle 33 est fixée transversalement dans l'extrémité avant de la partie avant 23, et une seconde tringle 34 est fixée transversalement dans la partie centrale 25 au voisinage de la partie avant 23. Bien évidemment, ces aménagements sont conçus de manière à ce que la première tringle 33 et la seconde tringle 34 soient respectivement positionnées en avant et en arrière du centre de gravité du moteur.

En variante, il est à noter que la seconde tringle 34 peut utiliser la structure de la platine 1 pour sa fixation et son renforcement structural.

Une sangle 35 est raccordée à chacune des deux extrémités de la première tringle 33, et est fixée à un point d'accrochage (non précisément représenté) du moteur.

Une sangle 36 est raccordée à chacune des deux extrémités de la seconde tringle 34, et est fixée à un point d'accrochage (non précisément représenté) de la structure arrière 21.

En variante, le point d'accrochage peut se situer sur la structure du mât 19.

Le personnel peut alors désolidariser l'ensemble propulsif monobloc 17 de la platine 1, qui elle demeure fixée dans l'aile 3, puis déposer de façon traditionnelle ledit ensemble propulsif monobloc 17 à l'aide de chacun des systèmes de levage 32, ces derniers permettant de régler la hauteur en quatre points, chaque système de levage 32 étant indépendant des trois autres.

Une fois les opérations de maintenance effectuées sur le moteur, il suffit au personnel de, tout d'abord, remonter l'ensemble propulsif monobloc 17 à l'aide des systèmes de levage 32, puis le rendre solidaire de la platine 1, et enfin désolidariser les deux longerons 22 de la platine 1 et de l'aile 3.

En variante, il doit être bien compris qu'il est également possible de démonter ladite structure avant 20 au lieu de la translater.

Une autre variante peut consister dans le fait de prévoir une structure avant 20 fixe et pourvue de points d'accrochage (non représentés) pour la sangle 35 de la tringle 33.

Ainsi, ces opérations de maintenance peuvent être réalisées très rapidement et de façon aisée, tout en garantissant un maximum de sécurité au personnel en charge de ces travaux.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention tel que défini par le texte des revendications.

## Revendications

1. Ensemble comprenant une platine (1) de fixation permettant la fixation amovible d'un ensemble propulsif monobloc (17) à une aile (3) d'un aéronef, et une paire de longerons (22) de manutention destinés à être fixé dans cette platine (1) de fixation, les longerons étant destinés à supporter un système de levage (32) de l'ensemble propulsif monobloc,
- ladite platine comprenant des premiers moyens de raccordement (4, 5, 8, 10, 13, 14) afin de permettre la fixation de ladite platine sur l'aile, des deuxièmes moyens de raccordement (24) permettant la fixation de l'ensemble propulsif monobloc sur ladite platine, et des troisièmes moyens de raccordement (7) permettant la fixation de ladite paire de longerons (22) de manutention sur la platine, et
- chaque longeron comprenant des premiers organes de raccordement (26) aptes à coopérer avec les premiers moyens de raccordement (4 ou 5) présentés par la platine (1), et des deuxièmes organes de raccordement (28) à l'aile (3).

2. Ensemble selon la revendication 1, dans lequel les premiers moyens de raccordement de ladite platine (1) sont réalisés sous la forme de ferrures d'attache (4, 5, 8, 10, 13, 14).

3. Ensemble selon la revendication 2, dans lequel au moins une première ferrure d'attache (4, 13) et une deuxième ferrure d'attache (5, 14) se faisant face sont ménagées de part et d'autre de la platine.

4. Ensemble selon l'une des revendications 2 ou 3, dans lequel au moins une ferrure d'attache avant (8) est ménagée en partie avant de la platine.

5. Ensemble selon l'une quelconque des revendications 2 à 4, dans lequel moins une ferrure d'attache arrière (10) est ménagée en partie arrière de la platine.

6. Ensemble selon l'une quelconque des revendications précédentes, dans lequel les deuxièmes moyens de raccordement sont réalisés sous la forme de perçages (24) ménagés dans la platine.

7. Ensemble selon l'une quelconque des revendications précédentes, dans lequel les troisièmes moyens de raccordement sont réalisés sous la forme d'alésages (7) ménagés dans la platine (1).

8. Ensemble selon l'une quelconque des revendications précédentes, dans lequel les premiers organes de raccordement comprennent une première ferrure de jonction (26) en partie centrale (25) desdits longerons (22).

9. Ensemble selon l'une quelconque des revendications précédentes, dans lequel les deuxièmes organes de raccordement comprennent une deuxième ferrure de jonction (28) en partie arrière (27) desdits longerons (22).

10. Ensemble selon l'une quelconque des revendications précédentes, dans lequel lesdits longerons comprennent une partie avant (23) adaptée pour recevoir une tringle (33) disposée transversalement.

11. Ensemble selon l'une quelconque des revendications précédentes, dans lequel lesdits longerons comprennent une partie centrale (25) adaptée pour recevoir une tringle (34) disposée transversalement.

## Claims

1. An assembly comprising a securing plate (1) enabling a one-piece propulsion unit (17) to be removably fastened to an aircraft wing (3), and a pair of longitudinal handling members (22) intended to be secured to said securing plate (1), the longitudinal members being intended to support a lifting system (32) for the one-piece propulsion unit,
- said plate comprising first connecting means (4, 5, 8, 10, 13, 14) in order to enable said plate to be secured on the wing, second connecting means (24) making it possible to secure the one-piece propulsion unit on said plate, and third connecting means (7) making it possible to secure said pair of longitudinal handling members (22) on the plate, and
- each longitudinal member comprising first connecting members (26) able to cooperate with the first connecting means (4 or 5) presented by the plate (1), and second connecting members (28) for connected to the wing (3).

2. The assembly according to claim 1, wherein the first connecting means of said plate (1) are made in the form of attachment fittings (4, 5, 8, 10, 13, 14),

3. The assembly according to claim 2, wherein at least a first attachment fitting (4, 13) and a second attachment fitting (5, 14) facing one another are positioned on either side of the plate.

4. The assembly according to one of claims 2 or 3, wherein at least one front attachment fitting (8) is formed in the front portion of the plate.

5. The assembly according to any one of claims 2 to 4, wherein at least one rear attachment fitting (10) is formed in the rear portion of the plate.

6. The assembly according to any one of the preceding claims, wherein the second connecting means are made in the form of piercings (24) formed in the plate.

7. The assembly according to any one of the preceding claims, wherein the third connecting means are made in the form of bores (7) formed in the plate (1).

8. The assembly according to any one of the preceding claims, wherein the first connecting members comprise a first junction fitting (26) in the central portion (25) of said longitudinal members (22).

9. The assembly according to any one of the preceding claims, wherein the second connecting members comprise a second junction fitting (28) in the rear portion (27) of said longitudinal members (22).

10. The assembly according to any one of the preceding claims, wherein said longitudinal members comprise a front portion (23) adapted to receive a rod (33) arranged transversely.

11. The assembly according to any one of the preceding claims, wherein said longitudinal members comprise a central portion (25) adapted to receive a rod (34) arranged transversely.

## Patentansprüche

1. Einheit, die eine Sicherungsplatte (1) umfasst, die die lösbare Sicherung einer einteiligen Antriebseinheit (17) an einem Flügel (3) eines Luftfahrzeugs erlaubt, und ein Paar längliche Griffelemente (22), die dazu bestimmt sind, in dieser Sicherungsplatte (1) befestigt zu sein, wobei die länglichen Elemente dazu bestimmt sind, ein Hubsystem (32) der einteiligen Antriebseinheit zu tragen,
- wobei die Platte erste Verbindungsmittel (4, 5, 8, 10, 13, 14) umfasst, um die Sicherung der Platte auf dem Flügel zu erlauben, zweite Verbindungsmittel (24), die die Sicherung der einteiligen Antriebseinheit auf der Platte erlauben, und dritte Verbindungsmittel (7), die die Sicherung des Paars länglicher Griffelemente (22) auf der Platte erlauben, und
- wobei jedes längliches Griffelement erste Verbindungsorgane (26) umfasst, die imstande sind, mit den ersten Verbindungsmitteln (4 oder 5), die von der Platte (1) bereitgestellt werden, zusammenzuarbeiten, und zweite Verbindungsorgane (28) mit dem Flügel (3).

2. Einheit nach Anspruch 1, wobei die ersten Verbindungsmittel der Platte (1) in Form von Befestigungsanschlägen (4, 5, 8, 10, 13, 14) ausgebildet sind.

3. Einheit nach Anspruch 2, wobei mindestens ein erster Befestigungsbeschlag (4, 13) und ein zweiter Befestigungsbeschlag (5, 14), die sich gegenüberstehen, auf der einen und der anderen Seite der Platte ausgebildet sind.

4. Einheit nach einem der Ansprüche 2 oder 3, wobei mindestens ein vorderer Befestigungsbeschlag (8) im vorderen Abschnitt der Platte ausgebildet ist.

5. Einheit nach einem der Ansprüche 2 bis 4, wobei mindestens ein hinterer Befestigungsbeschlag (10) im hinteren Abschnitt der Platte ausgebildet ist.

6. Einheit nach einem der vorangehenden Ansprüche, wobei die zweiten Verbindungsmittel in Form von Durchbrüchen (24) in der Platte ausgebildet sind.

7. Einheit nach einem der vorangehenden Ansprüche, wobei die dritten Verbindungsmittel in Form von Bohrungen (7) in der Platte (1) ausgebildet sind.

8. Einheit nach einem der vorangehenden Ansprüche, wobei die ersten Verbindungsorgane einen ersten Verbindungsbeschlag (26) im zentralen Abschnitt (25) der länglichen Elemente (22) umfassen.

9. Einheit nach einem der vorangehenden Ansprüche, wobei die zweiten Verbindungsorgane einen zweiten Verbindungsbeschlag (28) im hinteren Abschnitt (27) der länglichen Elemente (22) umfassen.

10. Einheit nach einem der vorangehenden Ansprüche, wobei die länglichen Elemente einen vorderen Abschnitt (23) umfassen, der ausgebildet ist, um eine quer angeordnete Stange (33) aufzunehmen.

11. Einheit nach einem der vorangehenden Ansprüche, wobei die länglichen Elemente einen zentralen Abschnitt (25) umfassen, der ausgebildet ist, um eine quer angeordnete Stange (34) aufzunehmen.
